Europäisches Patentamt

European Patent Office

Office européen des brevets

Publication number: **0 367 539**

**A1**

# EUROPEAN PATENT APPLICATION

Application number: 89311194.8

Date of filing: 30.10.89

Int. Cl.5· **A01M 1/20 , A01M 1/04**

Priority: **31.10.88 US 264375**
**13.09.89 US 406597**

Date of publication of application:
**09.05.90 Bulletin 90/19**

Designated Contracting States:
**DE ES FR GB GR IT**

Applicant: **SHERMAN, Daniel A.**
**1355 Bobolink Place**
**Los Angeles, CA 90069(US)**

Inventor: **SHERMAN, Daniel A.**
**1355 Bobolink Place**
**Los Angeles, CA 90069(US)**

Representative: **Keltie, David Arthur**
**DAVID KELTIE ASSOCIATES 7th Floor**
**Buchanan House 24-30 Holborn**
**London EC1N 2JB(GB)**

## Flying insect control device.

This invention relates to the control of flying insects in and around homes, commercial establishments, farm buildings and the like. Specifically, the formulation, design and technique involved in the device (2) allows the user to maintain an insect free environment and to dispense an insecticide capable of eliminating flying insects in a safe and effective manner. The use of a translucent sheet (10) that contains an insecticide (6) that leaches to the surface, while converting ambient light into a spectrum that attracts flying insects provides an economical method of delivering a killing agent to the insect. The use of, and method of application of a viscous liquid in conjunction with the above structure, broadens the appeal of the luring effect of the structure by providing a supply of moisture to the insects needed for their survival. Additionally, the unique method of applying the device in position that is demonstrated in the invention provides the user with a shield from coming into contact with the poisoned substance used to kill the flying insects.

FIG. 1

Flying insects have plagued mankind throughout recorded history. They spread disease and filth, soil foodstuffs and in general make an environment less favorable to humans and domestic animals.

As a known carrier of filth and disease, these vectors inhabit homes, restaurants, public buildings, farm buildings and food storage areas, and all manner of abode in and around human and domestic animals habitats.

Their ability to multiply in numbers equal to the amount of food and water available to support their population makes them one of the most difficult pests to eliminate, and their ability to fly over wide areas makes the amount of food and water that they can feed off and pollute almost impossible to calculate.

Many methods of eliminating these pests have evolved through the years and they include devices that range from the basic flyswatter, to sticky paper that traps the insects, to poisoned baits, to electrical devices that lure the insect to its death by electrocution.

The need to provide a safe and effective method of control and elimination has been apparent over the decades, and improvements in the state of the art in flying insect elimination have been demonstrated by prior patent art such as patent numbers 3,653,145, 4-1972, Stout, class 43/131, 4,160,335, 7-1979 Von Kohorn, class 43/131, 4,411,093, 10-1983 Stout, et al, class 43/131 and Sherman, allowed 5/23/89, class 43/131.

Although all of these devices have proven to be effective, they leave a large gap in practical use because of size, expense, danger to non-target species or complexity of application.

They also lack the ability to provide the insect with the much needed liquid that they need for their survival in a manner that made them effective to use in homes and other structures and in a manner that was convenient for the average person to use.

An object of the instant invention is to provide a safe and economical method of attracting flying insects to an area that has been treated by an insecticide while clearly indicating where that insecticide is located.

Another object of the invention is to convert the ambient light that is generated either by artificial means or by natural sunlight into a spectrum that attracts flying insects to a specific target area.

Yet another object of the invention is to impregnate a plastic translucent shield with an insecticide that will leech to the surface as the heat from either room temperature or an artificial source is applied to it.

And further, the invention provides a method of delivering a premeasured dose of insecticide, enough to kill the target insect, while preventing overuse and leaving behind doses that could harm other non-target species.

Additionally, the use of the impregnated plastic allows for the implementation of a lure system that is printed onto the plastic to bring the insects to the point of contact with the insecticide.

And, the use of a plastic that has been thoroughly impregnated with an insecticide will allow for a longer active life of the insecticide as it only reaches the surface in limited amounts that are replenished only when depleted.

An object of the instant invention is to provide such a method of application that will offer a liquid based viscous insecticide that will be attractive to flying insects in a manner that is expedient for the user to place in confined environs such as kitchens, and other areas of homes and buildings.

Still another object of the instant invention is to improve on the Sherman patent by utilizing the Sherman's patent ability to draw insects into target areas, and to offer to them a viscous stable substance, capable of eliminating them effectively.

And yet another object of the instant invention is to modify the Sherman patent in a manner that will allow it to carry said viscous material in a manner that will prevent the spreading of said viscous material from its surface.

Further, the instant invention utilizes a viscous insecticidal material formulated in a manner that insures that the attraction of the molecules within the viscous material will preclude the flow of the material laterally or vertically when coated on to an open plate and when said open plate is placed vertically as against a window pane to be used in the elimination of said flying insects.

Still, another object of the invention is to provide the user with a method of applying the device in place without the possibility of his coming into contact with the poisoned viscous insecticidal material that the device has been coated with.

These and other novel features of the instant invention will become apparent when viewed in conjunction with the following description and accompanying art, but the scope and use of the teachings may be modified to allow the use of different shapes and material than those depicted in the instant application.

## BRIEF DESCRIPTION OF THE DRAWINGS

Figure 1 demonstrates the basic configuration of the shield which has been formulated with an insecticide impregnated into the molded or extruded sheet. The sheet is shown to have a method of securing it to a surface and the lure type graphic is spread throughout the surface of the sheet. The translucent quality is demonstrated.

In Figure 2 we demonstrate the device as affixed to a window and once again show the inherent features contained within the impregnated plastic sheet. In this rendering the use of natural light is demonstrated as a method of generating both conversion of light spectrum and the heat needed to insure the replenishment of the insecticide to the surface of the sheet.

Figure 3 shows the impregnated plastic sheet, with the aforementioned features as applied to a source of artificial light and heat. This allows for use of the device in areas where no natural light may be present or in areas where it is desirable to draw the insects away from surfaces they might contaminate.

Figure 4 shows the invention depicted generally as a flat plate that has been fabricated with cross sections of grids, each of which said grids forms a well, the bottoms of said wells being coated with a viscous material capable of killing an insect ingesting said liquid.

Figure 5 is a top view of the device showing the relationships of the grids, plate, base surface and viscous coated wells.

Figure 6 is a partial side perspective of the plate showing various relationships of surfaces, viscous liquid in the construction of the device.

Figure 7 is a partial side view of the plate showing an alternative construction of the plate utilizing a small well formed as a depression in the plate and then filled with the viscous liquid.

Figure 8 shows a full top view of the plate demonstrating the possible positions of the wells indicated in Figure 7 containing the viscous liquid, and showing how these wells, spread throughout the plate, offers a wide target of liquid to attract the insects, and to allow these insects to feed in multiples without competing for the same food source.

Figure 9 shows a front view of the flying insect control device with its protective shield in place. The shield is designed to cover the viscous insecticidal material while in shipment and prior to actual placement and use.

Figure 10 is a rear view of the flying insect control device and depicts the overlap of the protective shield, now on the far side, and the use of self-adhesive strips that have been applied to the back of the device and will be used for the placement of the device against a window or similiar fixture for use against flying insects.

Figure 11 shows the flying insect control device as having been positioned on a window pane and demonstrates how the protective shield can be pulled back to expose the insecticide without the user actually coming into contact with the substance.

DETAILED DESCRIPTION OF THE DRAWINGS

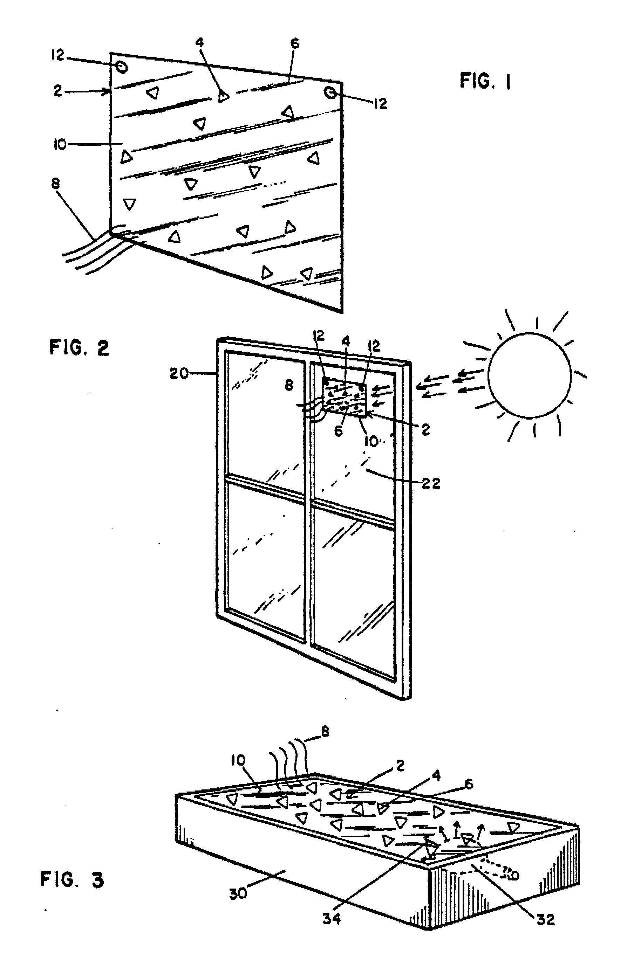

As can be seen in Figure 1 the flying insect control device is depicted generally as 2 and is formed as a flat sheet composed of a plastic molded or extruded material 10. Imprinted on the surface of the sheet are graphic designs 4 that can be random in nature or be actual renderings of objects or similar insects to act as lure or decoys for the target insect. In fabricating the plastic sheet 10 for manufacture, an insecticide 6 is mixed with the appropriate resin to form a compound of resin and insecticide. This meshing of the plastic 10 and the insecticide 6 forms a bonded structure that releases the insecticide at a timed rate based upon the density of the plastic material and the amount of heat applied to it. We also see in Figure 1 two adhesive strips 12 located at opposing ends of the sheet. These strips are used to secure the device to a wall or other similar structure. The translucent quality of the material is depicted as light waves 8 which pass through the plastic to convert the ambient light into a spectrum that attracts the target insect.

Figure 2 demonstrates the use of the flying insect control device 2 when used in conjunction with natural light. The impregnated plastic sheet 2 has been fastened to a window pane 22 located within the structure of a 4 pane window 20. The sun casts both light and heat through the pane 22 and this light and heat is transferred directly through the control device 2 which converts the natural spectrum of the sunlight into the desired spectrum 8 on the interior of the pane 22. The plastic 10 has been heated up and leeches the insecticide 6 to the surface. This enables the insecticide 6 to be positioned on the exterior of the device 2 and to be presented in a manner that will come into contact with an insect lighting on said surface. The flying insects being attracted by the graphics 4 and the attractive light spectrum 8 light on the device 2 and are then subject to the dose of poison 6 in order to kill them.

In Figure 3 we see the flying insect control device 2 in use with an artificial light and heat source 30. An electric bulb 32 emits light and heat that passes through the translucent plastic 10 and emerges as the desired spectrum of light 8. The heat generated from the bulb 32 causes the insecticide 6 to rise to the surface of the plastic 10 and deliver a lethal dose to an insect lighting upon said surface. The decoys or graphics 4 along with the converted light spectrum 8 draw the target insect to the surface and effectively destroy it.

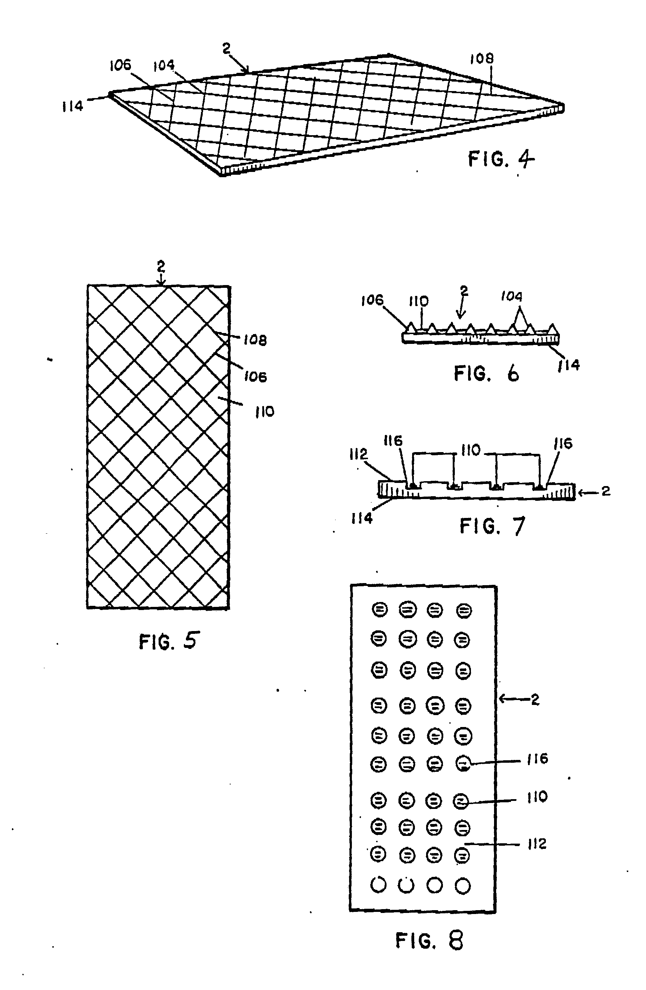

In Figure 4 we see the flying insect control device depicted generally as 2 and in the form of a flat plate 114, said flat plate having a translucent quality (not shown). Across the face of the plate 114 have been formed bosses 106 and 108 which are ridges running in geometrically opposing angles that intersect to form a well 104 capable of containing a viscous insecticidal substance and holding said viscous insecticidal substance within a smaller contained area with well defined perimeters 104 as formed by the bosses 106 and 108.

Figure 5 is a top view of the flying insect control device 2 showing the clearly defined wells that have been formed by the intersection of the bosses 106 and 108 and depicting the introduction of the viscous coating 110 to the plate. It should be noted that the use of the wells formed by bosses 106 and 108 are used for the control of the viscous substance when applied over large areas, and that the application of the viscous substance 110 may be applied directly to the plate, omitting the bosses 106 and 108, if said viscous substance 110 is formulated to a molecular structure that would inhibit its flow in both a vertical and lateral direction, when the flying instect control device 2 is placed in a vertical manner.

Figure 6 is a partial cutaway side view of the plate 114 showing that the bosses, in this case 106, are formed with steep angles to insure that they do not inhibit the insect light on the plate 114 from traveling with ease over the surface of the plate 114. The viscous insecticidal substance 110 is coated to a point below the top of the bosses 106 and 108 in order to allow for containment of the viscous insecticidal substance 110, and also to provide a barrier to someone running their hand, or other object across the surface of the device 2.

In Figure 7 we see an alternate construction of the flying insect control device showing the device 2 as formed with a series of wells 116 that have been formed downward from the surface of the plate 114's surface 112. Said wells 116 have been partially filled with the viscous insecticidal substance 110 to a point below the surface 112 but within easy reach of an insect lighting on the surface 112 and lowering a proboscis into the well 116.

In Figure 8 we see demonstrated one possible arrangement of the wells 116 on the surface 112 of the device 2. Shown is the viscous insecticidal substance 110 contained within the wells 116 but not on the surface of the plate 112. The distribution of the well 116 throughout the surface 112 of the plate allows more than one insect to light on the surface 112 and feed from any of the dispersed wells 116 without competing with other insects for the viscous insecticidal substance 110 located within the wells 116. This use of small depressed wells 116 dispersed within the plate and the minimal exposure of the viscous liquid 110 to possible touch by non-target species adds to the safety of the device 2. Additionally, since the surface 112 itself has not been coated by the insecticidal substance 110 the possibility of contamination, and/or spreading of the viscous insecticidal substance 110 is further minimized.

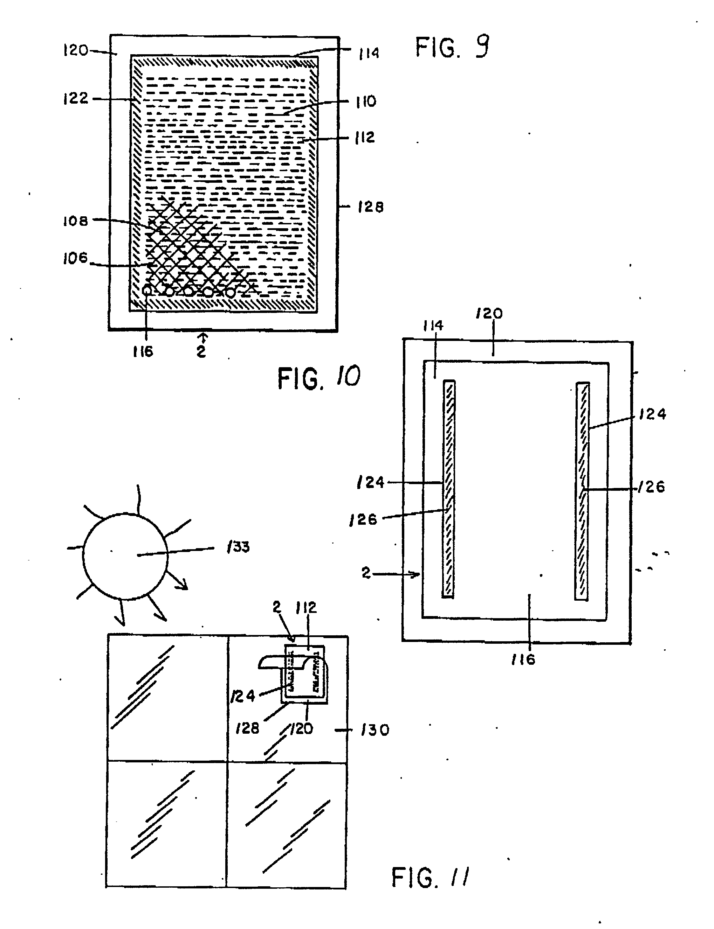

Figure 9 depicts the flying insect delivery system 2 as having been fitted with a protective peel off shield 128 that has been placed directly over the coated portion of the device 112 and covering the viscous insecticidal substance 110. The viscous insecticidal substance 110 is shown to have been applied in three different configurations, and open glaze on the surface 112 of the plate 114, between the ribs formed by bosses 106 and 108, and in the depressed wells 116 formed in the plate 114 itself. In all cases the viscous insecticidal substance 110 is only allowed to spread outwardly from the center without leaching over the ends, and an adhesive strip 122 has been applied around the entire border of the plate 114 on the top surface 112. Over this strip has been applied the protective peel away shield 128 which overlaps the plate 114 and forms a border 120 of non-coated surface giving the user a grip in which to peel the protective shield 128 from the plate 114.

Figure 10 depicts the back 116 of the flying insect control device 2 and shows the application of adhesive strips 124 which contain an adhesive substance 126 that in transit is covered with a peel off backing. The user would peel off the backing from the strip 124 exposing the open adhesive surface 126 and press the adhesive on to a vertical or other type structure to hold it in place. Shown clearly in this drawing is the non-adhesive and non-coated border 120 of the peel away protective shield 128 that overlaps the plate 114.

In Figure 11 we see the flying insect control system 2 having been placed inside a window 130. Secured to the window by the adhesive strips 124 the protective peel away shield 128 is removed by grasping the non-coated border 120 and pulling in any direction to expose the top surface 112 that has been coated with the viscous insecticidal substance 110.

## Claims

1. A flying insect control device comprised of a translucent colored plastic sheet (10) capable of converting ambient light that passes through said sheet into a colored spectrum of light that attracts flying insects, said plastic sheet (10) having been compounded with an insecticide (6) as an integral, said insecticide capable of leeching through said sheet to its surface and coating said surface with a lethal dose of poison capable of killing an insect lighting on said surface, said surface imprinted with graphics (4) or decoys capable of attracting flying insects to it.

2. A flying insect control device as in claim 1, said device having a self-adhesive strip (12) located at its rear to allow said device to be affixed to a structure or wall.

3. A flying insect control device as in claim 1 capable of being fitted into an independent holder containing an artificial light and heat source (30).

4. A flying insect control system: said system constructed of a solid plate (114), said plate being of a translucent quality, said plate having independently or in cooperation a series of wells (104 or 116) formed by raised bosses or depressed holes, said plate having been coated with a viscous insecticidal substance (110), said insecticidal substance having a molecular structure that inhibits its movement from the plate in a horizontal or vertical manner, said viscous insecticidal substance being covered by a peel away protective shield (128) said shield having a non-coated border (120) extending past the ends of said plate to allow for its removal, said plate having an adhesive (122) affixed to its coated side to hold said protective shield in place, said plate having a side opposing said shield to which a self-adhesive strip (124) has been applied.

FIG. 1

FIG. 2

FIG. 3

FIG. 4

FIG. 5

FIG. 6

FIG. 7

FIG. 8

FIG. 9

FIG. 10

FIG. 11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-1114048 (P.NICODEAU) <br> * page 1, left-hand column, last paragraph - right-hand column, paragraph 3; figure 1 * | 1 | A01M1/20 <br> A01M1/04 |
| A | | 3, 4 | |
| D,Y | US-A-4160335 (H.VON KOHORN ET AL) <br> * abstract * | 1 | |
| A | | 4 | |
| D,Y | US-A-3653145 (D.M.STOUT) <br> * abstract; figure 3 * | 1 | |
| A | | 4 | |
| A | FR-A-2346974 (HERCULITE PROTECTIVE FABRICS CORPORATION) <br> * claim 6 * | 1, 4 | |
| A | FR-A-2040847 (SOCIETE DES USINES CHIMIQUES RHONE-POULENC) <br> * claims 1-3 * | 4 | |
| A | DE-C-907136 (A.HAHN) <br> * claims 1-3 * | 1, 4 | **TECHNICAL FIELDS SEARCHED (Int. Cl.5)** <br><br> A01M |
| D,A | US-A-4411093 (D.M.STOUT ET AL) | | |

The present search report has been drawn up for all claims

| Place of search | Date of completion of the search | Examiner |
|---|---|---|
| THE HAGUE | 05 FEBRUARY 1990 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)